**Europäisches Patentamt**

**European Patent Office**

**Office européen des brevets**

(19)

(11) Numéro de publication : **0 374 004 B1**

(12) **FASCICULE DE BREVET EUROPEEN**

(45) Date de publication du fascicule du brevet :
**14.08.91 Bulletin 91/33**

(51) Int. Cl.⁵ : **F04D 27/02, F04D 29/70,**
**F02C 7/052, F02C 9/18**

(21) Numéro de dépôt : **89403376.0**

(22) Date de dépôt : **06.12.89**

(54) **Vanne de décharge de compresseur de turboréacteur.**

(30) Priorité : **15.12.88 FR 8816525**

(43) Date de publication de la demande :
**20.06.90 Bulletin 90/25**

(45) Mention de la délivrance du brevet :
**14.08.91 Bulletin 91/33**

(84) Etats contractants désignés :
**DE FR GB**

(56) Documents cités :
**FR-A- 932 500**
**FR-A- 1 399 565**
**FR-A- 2 088 303**
**FR-A- 2 518 169**
**US-A- 3 436 910**
**US-A- 3 964 257**

(73) Titulaire : **SOCIETE NATIONALE D'ETUDE ET**
**DE CONSTRUCTION DE MOTEURS**
**D'AVIATION, "S.N.E.C.M.A."**
**2, Boulevard du Général Martial Valin**
**F-75015 Paris (FR)**

(72) Inventeur : **Mouton, Pierre Charles**
**19, rue de la Mare aux Moines**
**F-91350 Grigny (FR)**

(74) Mandataire : **Moinat, François et al**
**S.N.E.C.M.A. Service des Brevets Boîte**
**Postale 81**
**F-91003 Evry Cédex (FR)**

Jouve, 18, rue Saint-Denis, 75001 PARIS

## Description

La présente invention a pour domaine technique celui des turbomachines et plus particulièrement des turboréacteurs d'aviation à double flux.

On sait que de façon classique une telle turbomachine comporte de l'amont vers l'aval dans le flux primaire, un compresseur axial amenant de l'air comprimé à une chambre de combustion dans laquelle l'air est, mélangé à du carburant sous pression que l'on brûle pour donner en aval de la chambre de l'énergie à une turbine axiale qui entraîne le compresseur et dont les gaz en sortie fournissent la poussée utile à la propulsion de l'engin.

De tels turboréacteurs ayant une configuration purement axiale absorbent par leur entrée frontale non seulement de l'air nécessaire à leur fonctionnement mais aussi selon les conditions climatologiques, du sable et/ou de l'eau qui représentent plutôt une gêne dans leur fonctionnement.

C'est notamment le cas lorsqu'un avion affronte un orage ou traverse un nuage de gros volume tel qu'un cumulus ou un cumulonimbus. Des quantités importantes d'eau sous forme de pluie ou de grêle peuvent alors pénétrer dans le compresseur. Si le moteur est en régime de plein gaz l'eau est vaporisée et, même si elle pénètre jusqu'à la chambre de combustion, l'eau est à un état de vapeur suffisamment chaude et pulvérisée pour ne pas causer d'extinction de la chambre de combustion qui est alimentée par un débit important de carburant.

Tel n'est pas le cas lorsqu'un avion est en descente, par exemple dans une phase d'approche avant atterrissage. Dans ce cas, le moteur tourne au ralenti, le taux de compression du compresseur est relativement faible et de l'eau à l'état liquide ou solide, sous forme de grosses gouttes, ou de particules de glace, ou, même "de paquets d'eau" peut arriver jusqu'à la chambre de combustion et éteindre la combustion d'un des brûleurs, voire de tous ou conduire au dévissage du moteur, la quantité de carburant étant relativement faible.

Ceci ne peut se produire que dans des cas exceptionnels où les conditions météorologiques excèdent les conditions prises en compte lors de la définition du moteur.

Dans la plupart des cas, les bougies d'allumage peuvent également être mouillées et devenir provisoirement inutilisables. Lorsque l'extinction de la chambre se produit, si le pilote n'est pas à même de quitter la zone de pluie critique, le (ou les) moteur(s) peut(vent) alors être totalement arrêté(s) avec les risques que cela comporte.

Pour éviter de telles situations, il est impératif d'éliminer au maximum l'eau ingérée avant quelle n'arrive jusqu'à la chambre de combustion, ou si elle y parvient de faire en sorte qu'elle ne puisse éteindre les brûleurs.

Divers moyens au niveau de la chambre de combustion peuvent être employés pour ce faire, comportant des déflecteurs d'eau obligeant l'air à emprunter des circuits complexes pour entrer dans les brûleurs, circuits que ne peut emprunter l'eau du fait de sa plus grande inertie.

Un autre moyen d'empêcher l'eau de parvenir au niveau de la chambre de combustion consiste à évacuer l'eau excédentaire en sortie du compresseur basse pression, avant que l'air chargé d'eau liquide ou solide ne pénètre dans le compresseur haute pression.

C'est le but de la présente invention que de permettre un tel résultat.

Pour y parvenir, l'invention prend pour support l'existence de vannes de décharge entre les compresseurs des turboréacteurs double flux et double corps. Une particularité de ces vannes est d'être ouverte au ralenti du moteur.

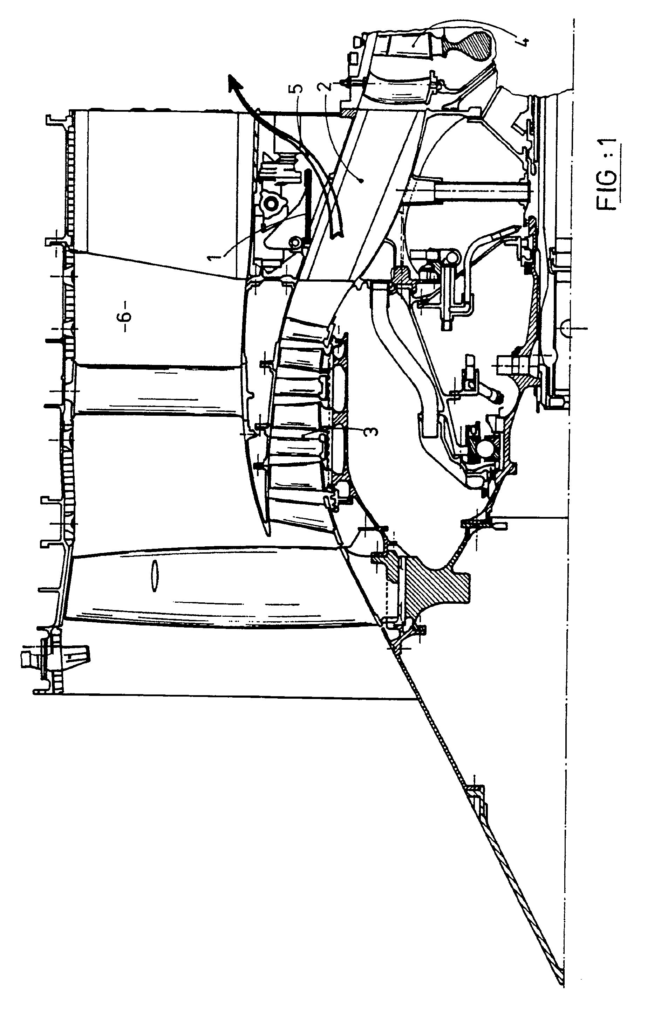

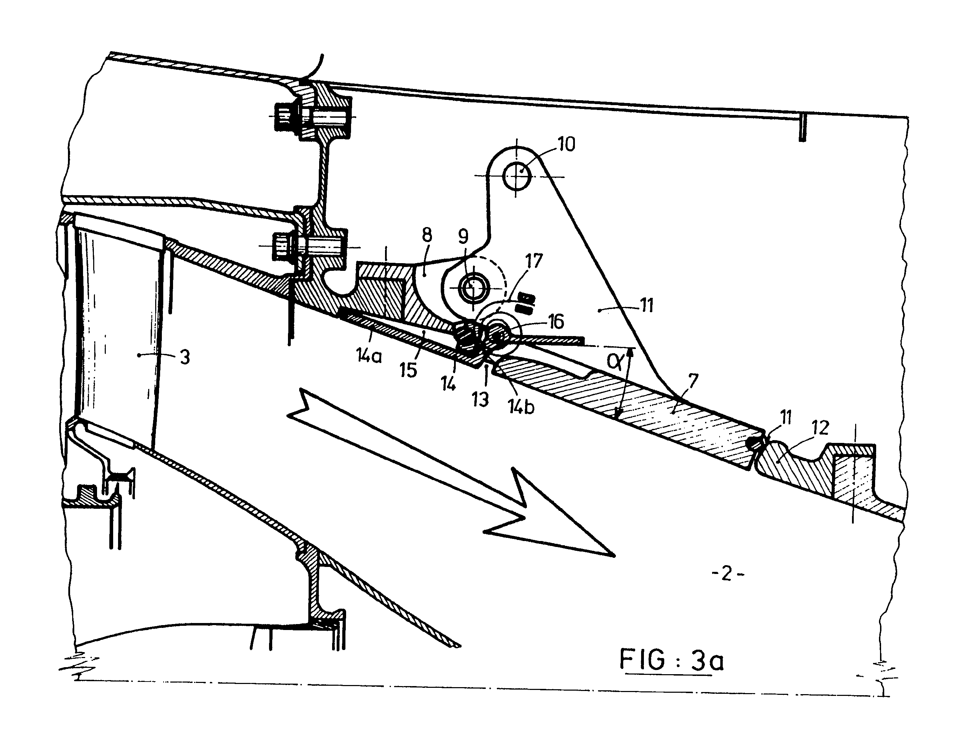

Ainsi que la montre la figure 1, représentant l'état de la technique, ces vannes 1 sont traditionnellement disposées dans le canal 2 séparant le compresseur basse pression 3 et le compresseur haute pression 4 et, lorsqu'elles sont ouvertes, créent un chemin d'évacuation 5 vers le veine secondaire 6 pour une partie du flux d'air comprimé par le compresseur basse pression. Cette disposition est utilisée lorsque pour éviter un risque éventuel de pompage du compresseur basse pression, on est obligé de le faire traverser par un débit d'air supérieur à celui qui peut être absorbé plus en aval par le compresseur haute pression. Le débit d'air excédentaire doit donc être évacué vers la veine secondaire, entre le compresseur basse pression et le compresseur haute pression.

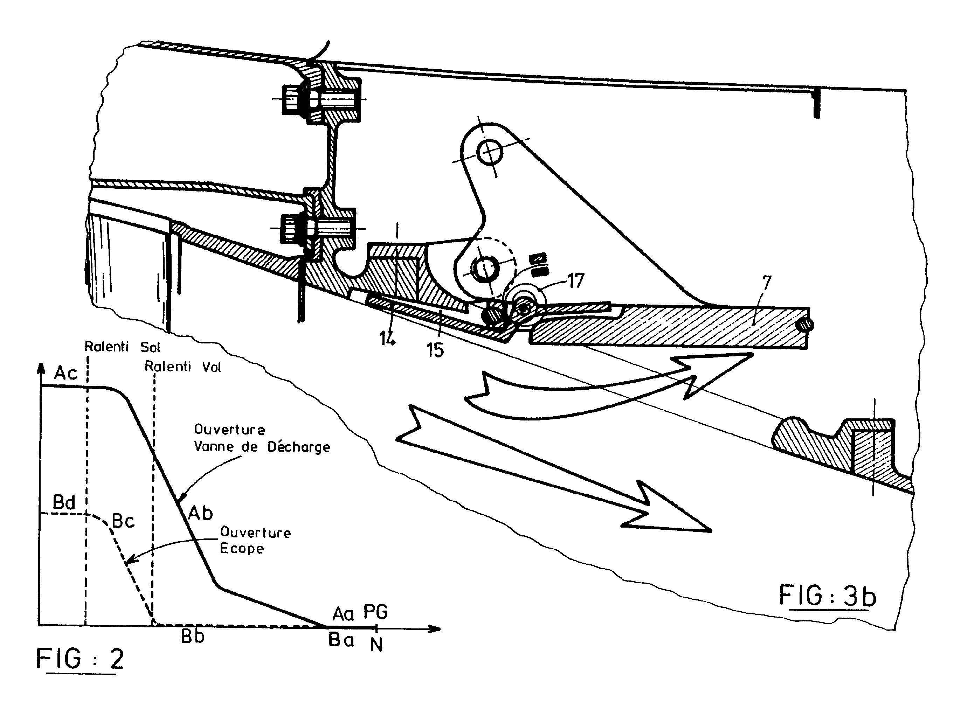

Il se trouve que cette situation a lieu pour les faibles régimes du turboréacteur et la courbe d'ouverture des vannes de décharge a une allure représentée par la courbe A de la figure 2.

Au ralenti et jusqu'à une vitesse de rotation du moteur voisine du 1/3 de sa vitesse au plein gaz les vannes de décharge sont complètement ouvertes, leur angle d'ouverture atteignant 45° et plus. Puis leur ouverture va décroissant lors de l'accélération du moteur, jusqu'à la position fermée à partir du régime de croisière jusqu'au plein gaz.

C'est précisément dans les conditions où ces vannes sont ouvertes que l'on rencontre les conditions les plus dangereuses d'ingestion d'eau. Or les vannes connues, si elles déchargent de l'air chargé d'eau dans ces conditions, ne peuvent écoper l'eau de façon maximale car elles n'ont aucune partie faisant saillie dans la veine. L'invention a donc pour objet d'adapter de façon simple ces vannes pour leur permettre de faire saillie dans la veine pour recueillir les particules d'eau solide ou liquide centrifugées contre la paroi externe de la veine. La centrifugation provient de l'effet de rotation fourni par le compresseur installé en amont ainsi que de la forme en col de cygne du conduit contenant la vanne. Plus précisément, dans une turbomachine double flux notamment turboréacteur d'aviation à double flux dont le flux primaire comprend un compresseur d'air suivi d'une chambre de combustion dans lequel l'air est mélangé à du carburant pour y être brûlé avant d'entraîner une turbine qui elle-même entraîne le compresseur, ledit compresseur comportant de façon connue des vannes de décharge placées dans des logements de la paroi externe du carter du compresseur et aptes à être ouvertes pour décharger hors de la veine une partie du débit d'air passant dans le compresseur, l'invention à pour objet le fait que lesdites vannes de décharge comportent des moyens articulés aptes à rester plaqués contre la veine tant que les vannes n'ont pas atteint un angle d'ouverture déterminé et aptes, lorsque les vannes ont atteint ledit angle d'ouverture, à s'ouvrir pour faire saillie dans la veine dans le prolongement amont desdites vannes pour recueillir en partie l'eau cheminant en excès dans le compresseur.

Selon une caractéristique importante de l'invention lesdits moyens articulés comportent une écope tournant autour d'un axe, des moyens de rappel pour plaquer l'écope contre la paroi de la veine tant que la vanne n'a pas atteint son angle d'ouverture prédéterminé et un levier de manoeuvre entraîné continuement par la vanne dès que celle-ci a atteint ledit angle d'ouverture.

D'autres caractéristiques seront précisées et des variantes de réalisation explicitées dans les figures annexées et le complément de description suivant.

Parmi les figures,

— la figure 1 est une semi-coupe longitudinale d'un turboréacteur double flux selon l'état de la technique qui a été décrit plus haut et auquel l'invention apporte un perfectionnement,

— la figure 2 est un schéma représentant l'angle d'ouverture des vannes de décharge en fonction de la vitesse de rotation du turboréacteur sur lequel on a figuré la courbe d'ouverture des écopes selon l'invention,

— les figures 3a à 3c représentent une vanne modifiée selon un premier mode de réalisation de l'invention et respectivement vanne et écope fermée, vanne ouverte et écope fermée, et enfin vanne et écope ouvertes,

— la figure 4 montre une vanne modifiée selon un deuxième mode de réalisation à l'état "vanne et écope fermées".

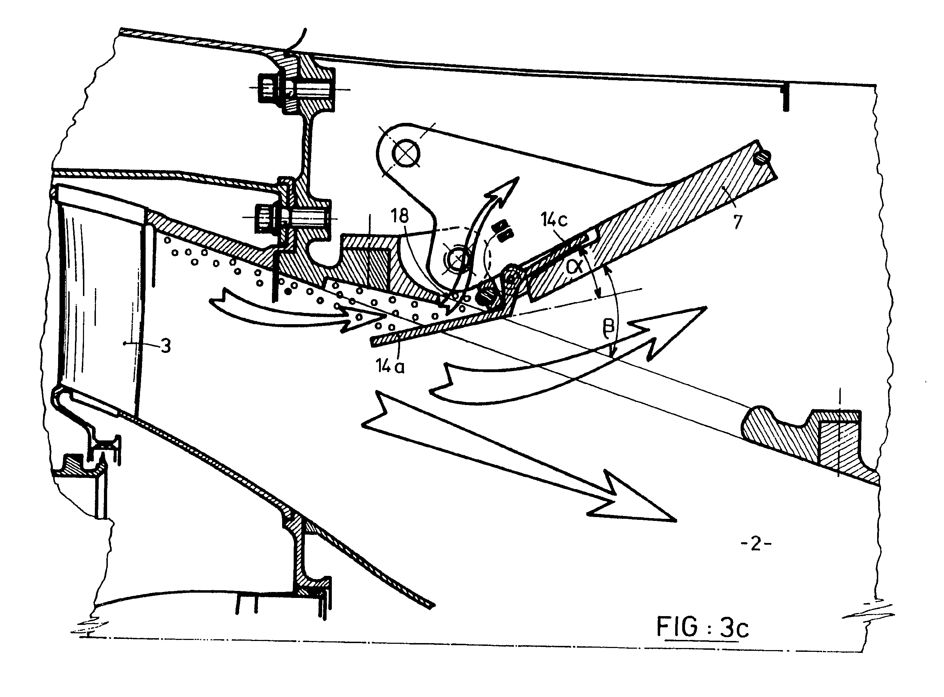

Si l'on se réfère à la figure 3a qui représente en gros plan la partie intermédiaire entre le compresseur BP 3 dont le dernier aubage est représenté, et le compresseur HP, on voit que la vanne de décharge 7 est articulée sur une chape 8 au moyen d'un axe 9.

Elle peut-être manoeuvrée au moyen d'un vérin de commande (non représenté) ou d'un anneau de commande simultané de plusieurs vannes, le vérin ou l'anneau étant relié à la vanne par un axe 10 porté par une aile radiale 11 de la vanne.

A l'état fermé la vanne est effacée dans l'ouverture 11 du carter 12 du compresseur qu'elle obture, l'étanchéité étant assurée par un joint.

La vanne comporte à sa partie amont une lumière 13 au travers de laquelle passe une écope 14 dont la partie amont 14a a la forme d'une pelle disposée au repos dans un évidement 15 du carter 12. La partie centrale repliée 14b de l'écope traverse la lumière 13 de la vanne et est articulée au moyen d'un axe 16 sur une chape portée extérieurement par la vanne 7.

L'écope 14 comporte enfin un levier de manoeuvre 14c s'étendant vers l'aval à partir de l'axe 16 en dehors de la partie radialement externe de la vanne 7. Le levier 14c est incliné d'un angle alpha par rapport à l'écope 14a proprement dite.

Un ressort de rappel 17 coopérant de façon classique avec l'axe 16 et une partie solidaire de la vanne rappelle l'écope 14a vers la paroi 12 du carter de façon qu'au repos la face interne de l'écope affleure la paroi sans y faire saillie.

Aux vitesses de rotation élevées de la turbomachine (plein gaz), la vanne et l'écope sont dans la position de la figure 3a qui correspond à la partie commune Aa, Ba aux courbes A et B de la figure 2, la courbe B étant représentative de l'ouverture de l'écope.

A ce régime tout le flux d'air issu du compresseur basse pression est ensuite comprimé par le compresseur HP. Le niveau de compression en sortie du compresseur HP et la chaleur du flux d'air sont tels que même si des grandes quantités d'eau sont ingérées, cette eau est finement pulvérisée et vaporisée et mélangée à une grande quantité d'air rendant le risque d'extinction de la combustion faible,voire inexistant. La figure 3b est représentative de la position de la vanne correspondant aux parties Ab et Bb des courbes d'ouverture de la figure 2.

Cette position correspond à une vitesse de rotation plus faible du turboréacteur, vitesse à laquelle la régulation du moteur commande l'ouverture progressive de la vanne de décharge pour éviter les phénomènes de pompage du compresseur BP. Dans cette position, la vanne est ouverte d'un angle intermédiaire qui peut être de 30° pour une vanne dont l'ouverture maxi est de 45°. La température et la pression du flux sont encore suffisants pour que le problème d'extinction de combustion en milieu humide ne se pose pas. De ce fait l'écope 14a reste plaquée dans son logement 15 du carter par le ressort 17, car l'inclinaison d'ouverture de la vanne ne dépasse pas encore l'angle alpha que fait le levier de manoeuvre avec l'écope. Ainsi l'écope n'est pas entraînée par l'ouverture de la vanne et ne créé pas de perte de charge ou distorsion qui pourraient être nuisibles aux performances ou marge en décrochage du moteur.

A la figure 3c, la régulation a commandé l'ouverture de la vanne d'un angle béta supérieur à l'angle alpha, ce qui correspond aux parties Ac et Bc, Bd des courbes de la figure 2. Ce cas correspond aux configurations de ralenti en vol, cas où le risque d'extinction en atmosphère humide est maximal.

Comme on le voit à la figure 3c, le levier de manoeuvre 14c est entraîné par la vanne 7 et entraîne l'ouverture de l'écope 14a en saillie dans la veine du flux primaire.

Dans cette configuration, l'eau liquide ou les grêlons centrifugés contre la paroi 12 de la veine sont écopés par la pelle 14 et remontent en amont de celle-ci dans l'espace libre 18 entre l'ouverture 11 et l'amont de la vanne 7 et se déchargent dans la veine secondaire.

Il s'ensuit que l'air atteignant le compresseur HP et la chambre de combustion aura été débarrassé de tout ou partie de ses composants en eau liquide ou solide et, étant plus sec, réduira les risques d'anomalies de fonctionnement (extinction ou dévissage).

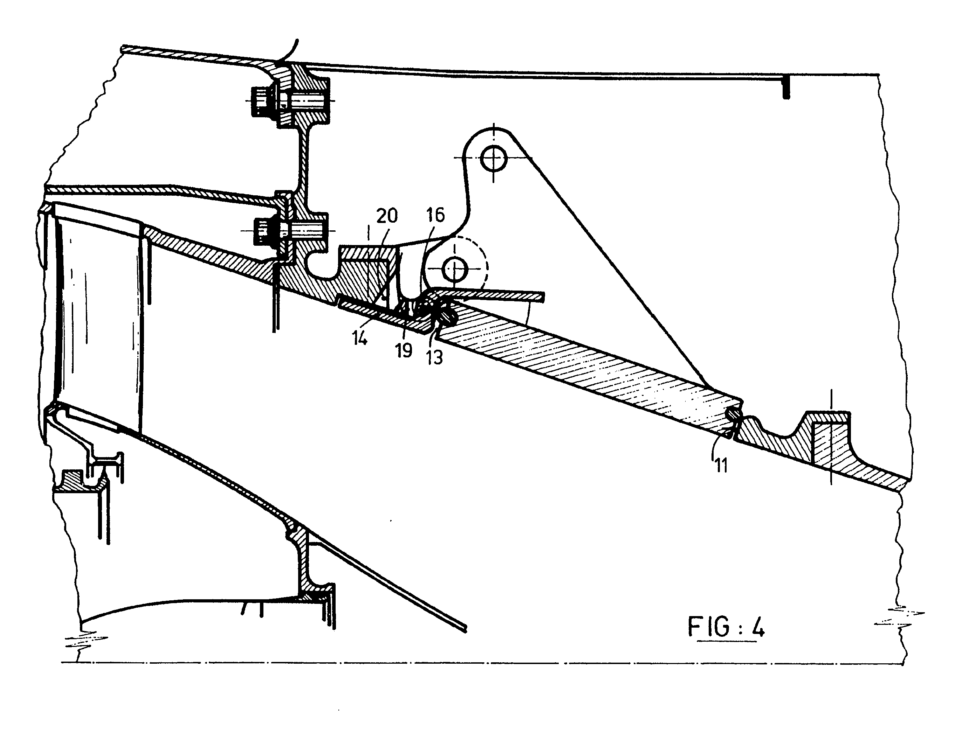

A la figure 4, on a représenté une variante de réalisation de l'écope selon l'invention. Toutes les parties communes portent les mêmes références chiffrées. Dans cette variante l'écope 14 n'est plus portée par la vanne 7 mais par le carter 12 en amont de la vanne 7. L'articulation 16 de l'écope s'effectue sur une chape portée par le carter. La vanne ne comporte donc pas de lumière pour le passage de l'écope mais par contre celle ci est disposée dans un logement 19 du carter 12 en amont de l'ouverture 13. Le fonctionnement de cette variante est identique à celui de la précédente. Toutefois, on a réalisé dans le carter des percages 20 pour le passage de l'air chargé d'eau liquide ou de grêle écopé par la pelle 14 lors de son fonctionnement. Ces percages sont obturés par l'écope 14a lorsque celle-ci est plaquée contre le carter, et ouverts lorsque l'ouverture de la vanne entraîne l'ouverture de l'écope.

Par ce moyen, on réalise de façon simple une réduction de la teneur en eau de l'air pénétrant en direction de la chambre de combustion en réalisant un dispositif qui ne crée pas de pertes de charges inutiles pour des positions "pleines fermées" ou intermédiaires d'ouverture de la vanne tant que n'est pas atteint l'angle déterminé d'ouverture de celle-ci qui commande l'écopage.

Cette solution particulièrement simple est adaptée à être montée en remplacement sur des matériels déjà existants pour lesquels des problèmes d'extinction de combustion risquent de se produire.

## Revendications

1. Turbomachine double flux, notamment turboréacteur d'aviation à double flux dont le flux chaud comprend un compresseur d'air suivi d'une chambre de combustion dans lequel l'air est mélangé à du carburant pour y être brûlé avant d'entraîner une turbine qui elle-même entraîne le compresseur, ledit compresseur comportant de façon connue des vannes de décharge (7) placées dans des logements (11) de la paroi externe du carter (12) du compresseur et aptes à être ouvertes pour décharger hors de la veine principale (2) une partie du débit d'air passant dans le compresseur, turbomachine caractérisée en ce que lesdites vannes de décharge comportent des moyens articulés (14, 14c, 16, 17) aptes à rester plaqués contre la veine tant que la vanne (7) n'a pas atteint un angle d'ouverture alpha déterminé et aptes lorsque les vannes ont atteint ledit angle d'ouverture à s'ouvrir pour faire saillie dans la veine (2) dans le prolongement amont desdites vannes (7) pour recueillir l'eau entrant en excès dans le compresseur.

2. Turbomachine selon la revendication 1, caractérisée en ce que lesdits moyens articulés comportent une écope (14) tournant autour d'un axe (16), des moyens de rappel (17) pour plaquer l'écope contre la paroi de la veine tant que la vanne n'a pas atteint son angle d'ouverture prédéterminé et un levier de manoeuvre (142) entraîné continûment par la vanne dès que celle-ci a atteint ledit angle d'ouverture.

3. Turbomachine selon la revendication 2, caractérisée en ce que le moyen de rappel (17) est constitué par un ressort apte à plaquer l'écope (14) contre la paroi (12) de la veine.

4. Turbomachine selon l'une quelconque des revendications 2 ou 3 caractérisée en ce que l'écope (14) est effacée dans l'épaisseur de la paroi (12) du carter tant que la vanne ne l'entraîne pas en rotation.

5. Turbomachine selon l'une quelconque des revendications 2 à 4, caractérisée en ce que l'écope (14) est portée par la vanne (7), traverse une lumière (13) de celle-ci de telle sorte que son axe d'articulation(16) et son levier de manoeuvre (14c) soient placés sur la face de la vanne extérieure à la veine.

6. Turbomachine selon la revendication 5, caractérisée en ce que lorsque l'écope (14) est entraînée en rotation par la vanne (7) et fait saillie dans la veine, un espace déterminé (18) est défini entre le bord amont de la vanne (7) et le bord amont de l'ouverture (11) du carter pour permettre l'écoulement vers l'extérieur de la veine (2) de l'eau collectée par l'écope (14) et ruisselant sur le bord externe de celle-ci.

7. Turbomachine selon l'une quelconque des revendications 2 à 4 caractérisée en ce que l'écope (14) est portée par le carter (12) du compresseur en amont de l'ouverture de la vanne (7), tourne autour d'un axe de rotation (16) disposé à l'extérieur dudit carter, le levier de manoeuvre (14c) étant placé en regard de la partie externe de la vanne pour être entraîné par celle-ci lors de son ouverture.

8. Turbomachine selon la revendication 7, caractérisée en ce que des orifices (20) traversant le carter (12) en amont de la vanne (7) sont obturés par l'écope (14) dans sa position effacée dans la paroi et sont découverts lors de la rotation de ladite écope pour permettre l'évacuation vers l'extérieur de la veine (2) de l'eau recueillie par l'écope et ruisselant le long du bord externe de celle-ci.

9. Turbomachine selon l'une quelconque des revendications 2 à 8 caractérisée en ce que l'angle d'ouverture des vannes (7), à partir duquel l'écope (14) est entraînée vers l'ouverture, est de 30° pour une vanne dont l'ouverture maxi est de 45°.

## Patentansprüche

1. Zweistrom-Turbomaschine, insbesondere Zweistrom-Luftstrahltriebwerk, bei in dem Warmstrom ein Luftverdichter angeordnet ist, auf den eine Brennkammer folgt, in der die Luft mit Kraftstoff gemischt wird, um dort verbrannt zu werden, bevor sie eine Turbine antreibt, die ihrerseits den Verdichter antreibt, wobei der Verdichter in bekannter Weise Abblasventile (7) aufweist, die in Aufnahmen (11) der Außenwand der Verdichtergehäuses (12) angeordnet sind und die geöffnet werden können, um einen Teil der in den Verdichter gelangenden Luftdurchsatzmenge in den Hauptstrom (2) zu entladen, dadurch gekennzeichnet, daß die Abblasventile verschwenkbare Mittel (14, 14a, 16, 17) aufweisen, die an den Strömungskanal angelegt bleiben, solange das Ventil (7) nicht einen vorbestimmten Öffnungswinkel Alpha erreicht hat, und die sich dann, wenn die Ventile diesen Öffnungswinkel erreicht haben, öffnen und in stromaufwärtiger Verlängerung der Ventile (7) in den Strömungskanal (2) hineinragen und überschüssiges Wasser sammeln, das in den Verdichter eintritt.

2. Turbomaschine nach Anspruch 1, dadurch gekennzeichnet, daß die verschwenkbaren Mittel umfassen : eine um eine Achse (16) drehbare Schöpfkelle (14), ferner Rückstellmittel (17), die die Schöpfkelle gegen die Wand des Strömungskanals andrücken, solange das Ventil nicht den vorbestimmten Öffnungswinkel erreicht hat, sowie einen Betätigungshebel (14c), der von dem Ventil kontinuierlich bewegt wird, sobald dieses den genannten Öffnungswinkel erreicht hat.

3. Turbomaschine nach Anspruch 2, dadurch gekennzeichnet, daß das Rückstellmittel (17) aus einer Feder besteht, die die Schöpfkelle (14) gegen die Wand (12) des Strömungskanals vorspannt.

4. Turbomaschine nach einem der Ansprüche 1 oder 3, dadurch gekennzeichnet, daß die Schöpfkelle (14) in der Dickenausdehnung der Gehäusewand (12) versenkt ist, solange sie nicht durch das Ventil gedreht wird.

5. Turbomaschine nach einem der Ansprüche 2 bis 4, dadurch gekennzeichnet, daß die Schöpfkelle (14) von dem Ventil (7) getragen ist und eine in diesem vorgesehene Öffnung (13) durchdringt, wobei ihre Schwenkachse (16) und ihr Betätigungshebel sich auf derjenigen Seite des Ventils befinden, die außerhalb des Strömungskanals liegt.

6. Turbomaschine nach Anspruch 5, dadurch gekennzeichnet, daß dann, wenn die Schöpfkelle (14) von dem Ventil (7) gedreht wird und in den Strömungskanal hineinragt, zwischen dem stromaufwärtigen Rand des Ventils (7) und dem stromaufwärtigen der Öffnung (11) des Gehäuses ein vorbestimmter Zwischenraum (18) gebildet wird, der das Abfließen des von der Schöpfkelle (14) gesammelten Wassers aus dem Strömungskanal und sein Ablaufen über den Außenrand der Schöpfkelle ermöglicht.

7. Turbomaschine nach einem der Ansprüche 1 bis 4, dadurch gekennzeichnet, daß die Schöpfkelle (14) stromaufwärts der Öffnung des Ventils (7) von dem Gehäuse (12) des Verdichters getragen ist und sich um eine Achse (16) dreht, die außerhalb des Gehäuses angeordnet ist, wobei der Betätigungshebel (14c) gegenüber dem äußeren Teil des Ventils liegt, so daß er beim Öffnen des Ventils von diesem mitgenommen wird.

8. Turbomaschine nach Anspruch 7, dadurch gekennzeichnet, daß Öffnungen (20), die das Gehäuse (12) stromaufwärts des Ventils (7) durchdringen, von der Schöpfkelle (14) verschlossen sind, wenn diese in der Wand versenkt ist, und die (20) durch das Drehen der Schöpfkelle freigegeben werden und dann ermöglichen, daß das von der Schöpfkelle gesammelte Wasser aus dem Strömungskanal (2) austritt und über den Außenrand der Schöpfkelle abfließt.

9. Turbomaschine nach einem der Ansprüche 2 bis 8, dadurch gekennzeichnet, daß der Öffnungswinkel der Ventile (7), von dem aus die Schöpfkelle (14) in ihre Öffnungsstellung mitgenommen wird, bei einem Ventil, dessen maximaler Öffnungswinkel 45° ist, 30° beträgt.

## Claims

1. Turboshaft bypass engine, notably an aircraft turbojet bypass engine of which the hot flow comprises an air compressor followed by a combustion chamber in which the air is mixed with fuel and burned therein before it drives a turbine which itself drives the compressor, the said compressor comprising in known fashion blow off valves (7) placed in housings (11) in the outer wall of the casing (12) of the compressor and capable of being opened to discharge from the primary airflow (2) a part of the flow of air passing through the compressor, characterised in that the said blow off valves comprise means of articulation (14, 14c, 16, 17) capable of remaining against the wall of the airflow as long as the blow off valve (7) has not attained a predetermined angle of opening alpha and capable when the blow off valves have reached the said angle of opening to open out and to cause to project into the airflow (2) an upstream extension of the said blow off valves (7) to collect excessive amounts of water entering the compressor.

2. Turboshaft engine in accordance with Claim 1, characterised in that the said means of articulation comprise a scoop (14) pivotted on an pin (16), a means of return (17) to press the scoop against the wall of the airflow as long as the the blow off valve has not reached its predetermined angle of opening and an actuating lever (142) [sic....14c] continuously actuated by the blow off valve when this has reached the said angle of opening.

3. Turboshaft engine in accordance with Claim 2, characterised in that the means of return (17) is constituted by a spring capable of causing the scoop (14) to remain against the wall (12) of the airflow.

4. Turbojet engine in accordance with either of the Claims 2 or 3, characterised in that the scoop (14) is recessed into the wall (12) of the casing as long as the blow off valve does not cause it to rotate.

5. Turboshaft engine in accordance with any of the Claims 2 to 4, characterised in that the scoop (14) is carried on the blow off valve (7), passes through an opening (13) in this in such a way that its pivot pin (16) and its actuating lever (14c) are situated on the face of the blow off valve external to the airflow.

6. Turboshaft engine in accordance with Claim 5, characterised in that when the scoop (14) is driven in rotation by the blow off valve (7) and projects into the airflow, a given space (18) is defined between the upstream edge of the blow off valve (7) and the upstream edge of the opening (11) of the casing to allow the water collected by the scoop (14) and running along the outer side of the the airflow (2) to flow away externally to it.

7. Turboshaft engine in accordance with any of the Claims 2 to 4, characterised in that the scoop (14) is carried on the compressor casing (12) upstream of the opening for the blow off valve (7), turns on a pin (16) placed on the outside of the said casing, the actuating lever (14c) being placed to face the external side of the blow off valve to be actuated by this latter during its opening.

8. Turboshaft engine in accordance with Claim 7, characterised in that the orifices (20) passing through the casing (12) upstream of the blow off valve (7) are closed off by the scoop (14) when in its flush position in the wall and are uncovered when the scoop is rotated so as to allow the removal externally to the airflow (2) of the water collected by the scoop and running along the outer side of the airflow.

9. Turboshaft engine in accordance with any of the Claims 2 to 8, characterised in that the angle of opening of the blow off valves (7) which forms the basis for actuating the opening of the scoop (14) is 30° for a blow off valve whose maximum angle of opening is 45°.

FIG : 1

FIG : 3a

-2-

FIG : 3b

Ralenti Sol
Ralenti Vol

Ac

Ouverture
Vanne de Décharge

Bd

Bc

Ab

Ouverture
Ecope

Aa PG

Bb

Ba N

FIG : 2

14

15

17

7

FIG : 3c

FIG : 4

11

16

20

19 13

14

11